# EUROPÄISCHE PATENTANMELDUNG

(11) **EP 4 560 170 A1**
(43) Veröffentlichungstag der Anmeldung: **28.05.2025**
(21) Anmeldenummer: 24214136.4
(22) Anmeldetag: 20.11.2024
(51) Int. Cl.: F16L 13/14

(54) **KLEMMRING FÜR EINEN FITTING UND FITTING MIT EINEM KLEMMRING**

(30) Priorität: 22.11.2023 DE 102023132503
(71) Anmelder: Viega Technology GmbH & Co. KG, 57439 Attendorn (DE)
(72) Erfinder: Hofrichter, Simon, 57399 Kirchhundem (DE); Pace, Mario, 57368 Lennestadt (DE); Köster, Paul, 57462 Olpe (DE)
(74) Vertreter: Cohausz & Florack

(57) **Zusammenfassung**

Die Erfindung betrifft einen Klemmring für ein Fitting für ein von außen abzudichtendes Rohr, mit einem umfangseitig geschlossenen Montagering (3) und mit einer Mehrzahl von Funktionselementen (4), wobei die Funktionselemente (4) zum Halten und/oder Fixieren eines einzusteckenden Rohrs ausgebildet sind, wobei die Funktionselemente (4) umfangseitig mit dem Montagering (3) verschwenkbar verbunden sind und aus einer Ausgangsposition radial nach innen elastisch bewegbar sind, wobei die Funktionselemente (4) in der Ausgangsposition einen äußeren Durchmesser definieren, der größer als der Außendurchmesser des Montagerings (3) ist und wobei die Funktionselemente (4) in der Ausgangsposition in azimutaler Richtung beabstandet voneinander angeordnet sind. Die Erfindung betrifft auch einen Fitting (40) mit einem Klemmring (2). Der Klemmring löst die Aufgabe, einen Klemmring und einen Fitting mit einem solchen Klemmring anzugeben, wobei das Einsetzen erleichtert ist und die Stabilität des Klemmrings im Fitting verbessert ist.

## Beschreibung

Die Erfindung betrifft einen Klemmring für ein Fitting für ein von außen abzudichtendes Rohr und einen Fitting zum Verbinden mit einem von außen abzudichtenden Rohr mit einem Klemmring.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um ein Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels einer Pressbacke radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend ausgebildet sein.

Als Presstechnik für ein radiales Umformen des Pressabschnittes kommen vorwiegend radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Bei Pressfittings wird unterschieden, ob ein Rohr beim Verpressen von außen abgedichtet und fixiert wird oder ob zumindest ein Teil des Fittings, beispielsweise in Form einer Stützhülse von innen das abzudichtende Rohr stabilisiert. Die vorliegende Erfindung betrifft die Art von Fittings, bei denen das Rohr von außen abgedichtet und fixiert wird. Das schließt grundsätzlich nicht aus, dass auch eine innerhalb des Rohres angeordnete Komponente des Fittings angeordnet wird, in der Regel ist das aber nicht der Fall.

Als Materialien für von außen abzudichtende Rohre werden einerseits feste Werkstoffe, insbesondere metallische Werkstoffe eingesetzt. Als feste Werkstoffe kommen auch feste Kunststoffe in Frage. Als Materialien kommen hierfür in Frage insbesondere Metalle beispielsweise Edelstähle wie ferritische Stähle wie 1.4520, 1.4521, austenitische Stähle wie 1.4404, Duplex-Stähle wie 1.4462, Rotguss, SiBr, Kupfer, aber auch feste Kunststoffe wie beispielsweise vernetztes Polyethylen (PE-X), Polyethylen erhöhter Temperaturbeständigkeit (PE-RT), Polyvenylchlorid (PVC) sowie Polypropylen (PP) bei entsprechenden Wandstärken zum Einsatz. Des Weiteren können Mehrschichtverbundrohre ausreichend starr für eine Abdichtung von außen ausgeführt sein, beispielsweise über eine dickere Aluminium-Lage, ebenso können auch faserverstärkte Rohre eingesetzt werden.

Die beschriebenen Fittings und deren Komponenten bestehen bevorzugt aus einem Metall, um eine Verformbarkeit bei ausreichender Härte und Formstabilität nach dem Umformen zu gewährleisten. Als Metalle kommen die für die starren Rohre bereits genannten Metalle in Frage, beispielsweise Edelstähle wie ferritische Stähle wie 1.4520, 1.4521, austenitische Stähle wie 1.4404, Duplex-Stähle wie 1.4462, Rotguss, SiBr, Kupfer.

Die beschriebenen Fittings und deren Komponenten können jedoch auch aus einem nicht-metallischen Werkstoff bzw. Kunststoff bestehen, wenn der nicht-metallische Werkstoff ausreichende Eigenschaften für ein Verpressen und dauerhaftes Verbinden mit Rohren ermöglicht. Als Werkstoffe kommen hier beispielsweise die folgenden Stoffe in Frage: vernetztes Polyethylen (PE-X), Silan-vernetztes Polyethylen (PE-Xb) oder physikalisch vernetztes Polyethylen (PE-Xc), Polyethylen erhöhter Temperaturbeständigkeit (PE-RT), Polyvenylchlorid (PVC), Polypropylen (PP) bei entsprechenden Wandstärken, Polyphenylsulfon (PPSU), Polyetheretherketon (PEEK) oder Polyaryletherketon (PAEK), aliphatisches biobasiertes Polyamid (PA410, PA12, PA12-GF30) oder Polypropylen-Random-Copolymer mit modifizierter Kristallstruktur und erhöhter Temperaturbeständigkeit (PP-RCT).

Fittings zum Verbinden mit einem von außen abzudichtenden Rohr können verschiedene Ausgestaltungen aufweisen. In der Regel ist ein Dichtungsring, beispielsweise ein O-Ring, zum Abdichten des Fittings gegenüber der Rohraußenseite vorgesehen. Des Weiteren sind Halteelemente und/oder Fixierelemente vorgesehen, die vor und nach dem Verpressen das Rohr in der erforderlichen Position relativ zum Fitting fixieren.

Beispielsweise weist ein Fitting zum Verbinden mit einem von außen abzudichtenden Rohr einen Grundkörper einen Aufbau mit einem in dem Grundkörper umfangseitig ausgebildeten und nach innen vorstehenden Anschlagelement, mit einer mit dem Grundkörper verbundenen und eine Außenkontur bildenden Presshülse, wobei die Presshülse eine nach innen zum aufzunehmenden Rohr hin gerichtete Kammer aufweist, mit einem in der Kammer angeordneten Klemmring, wobei der Klemmring aus einem Kunststoff besteht und eine Mehrzahl von entgegen der Auszugsrichtung des einzuschiebenden Rohres ausgerichteten Klemmelementen aufweist, und mit einem in der Kammer angrenzend an das Anschlagelement angeordneten Dichtelement auf, wobei die Presshülse geeignet ist, zusammen mit dem Klemmring, den Klemmelementen und dem Dichtelement das zu verbindende starre Rohr von außen abzudichten.

Der Grundkörper des Klemmrings ist aus einem Kunststoff hergestellt und weist eine geschlossene Ringform auf. Um den Klemmring in ein Fitting bzw. in die hinterschnittene Kammer der Presshülse einzusetzen, muss dieser radial zusammengedrückt werden, wozu axial verlaufende Schlitze vorgesehen sind, die das Zusammendrücken ermöglichen. Ebenso ist es möglich, den Klemmring in C-Form, also als seitlich offener Ring auszubilden.

Problematisch bei der zuvor beschriebenen Ausgestaltung der Fittings und der dabei verwendeten Klemmringe ist, dass insbesondere bei kleinen Nennweiten der zu verbindenden Rohre die nicht vollständig geschlossene Ringform des Klemmrings wegen der axialen Schlitze und/oder der C-Form zu Instabilitäten führt. Daher können gerade bei kleinen Nennweiten, aber nicht nur dafür, die nicht vollständig geschlossene Ringform zu fehlerhaften Positionierungen des Klemmrings in der Presshülse des Fittings führen.

Daher liegt der vorliegenden Erfindung die Aufgabe zugrunde, einen Klemmring und einen Fitting mit einem solchen Klemmring anzugeben, wobei das Einsetzen erleichtert ist und die Stabilität des Klemmrings im Fitting verbessert ist.

Die zuvor aufgezeigte Aufgabe wird erfindungsgemäß gelöst durch einen Klemmring für ein Fitting für ein von außen abzudichtendes Rohr, mit einem umfangseitig geschlossenen Montagering und mit einer Mehrzahl von Funktionselementen, wobei die Funktionselemente zum Halten und/oder Fixieren eines einzusteckenden Rohrs ausgebildet sind, wobei die Funktionselemente umfangseitig mit dem Montagering verschwenkbar verbunden sind und aus einer Ausgangsposition radial nach innen elastisch bewegbar sind, wobei die Funktionselemente in der Ausgangsposition einen äußeren Durchmesser definieren, der größer als der Außendurchmesser des Montagerings ist.

Die zuvor aufgezeigte Aufgabe wird erfindungsgemäß auch gelöst durch einen Fitting zum Verbinden mit einem von außen abzudichtenden Rohr, mit einem Grundkörper, mit einer mit dem Grundkörper verbundenen Presshülse, wobei die Presshülse eine nach innen zum aufzunehmenden Rohr hin gerichtete Kammer aufweist, mit einem in der Kammer angeordneten Klemmring, wobei der Klemmring aus einem Kunststoff besteht und eine Mehrzahl von Funktionselementen aufweist, und mit einem in der Kammer angeordneten Dichtelement, wobei die Presshülse geeignet ist, zusammen mit dem Klemmring und dem Dichtelement das zu verbindende Rohr von außen abzudichten, wobei der Klemmring in der zuvor beschriebenen Weise ausgebildet ist.

Der erfindungsgemäße Aufbau des Klemmrings weist zunächst einen geschlossenen Montagering auf, der im Fitting, insbesondere im distalen Ende der Presshülse angeordnet werden kann. In dieser Position gibt der Montagering dem Klemmring eine ausreichende azimutale Stabilität. Der Montagering ermöglicht zudem nach dem Verpressen ein zusätzliches Abdichten des Fittings gegenüber dem Rohr.

Die Funktionselemente können auf einen Außendurchmesser kleiner als der Innendurchmesser des distalen Endes der Presshülse zusammengedrückt werden. Somit können die Funktionselemente für ein Einsetzen in die Presshülse radial zumindest soweit nach innen verbogen werden, dass die Funktionselemente in die Presshülse eingeschoben werden können. Dazu dienen die verschwenkbaren Verbindungen zwischen den Funktionselementen und dem Montagering, wobei die Verbindungen als Scharniere tangential zum Rohr zum Einklappen der Funktionselemente ausgebildet sein können.

Durch den elastischen Aufbau der Verbindung mit dem Montagering klappen die Funktionselemente innerhalb der Presshülse nach außen auf und sind dann innerhalb der Kammer positioniert, vorzugsweise liegen die Funktionselemente mit ihren Außenseiten an der Innenseite der Presshülse an.

Die Funktionselemente weisen einen größeren Außendurchmesser als der Montagering auf und blockieren somit eine axiale Bewegung der Klemmrings in distaler Richtung, wenn die Funktionselemente in der Kammer angeordnet sind. Der geschlossene Montagering und damit auch der gesamte Klemmring sind somit im eingebauten Zustand im Wesentlichen ortsfest in der Presshülse angeordnet.

Durch eine geeignete Wahl der Geometrie und der Materialeigenschaften sowie der Materialstärken können die Federwege der Funktionselemente so eingestellt werden, dass eine definierte und gleichbleibende Montagekraft und Rohrhaltekraft unabhängig der Toleranzen des Rohrs realisiert werden.

In bevorzugter Weise sind die Funktionselemente in der Ausgangsposition in azimutaler Richtung beabstandet voneinander angeordnet sind. Dadurch besitzen die Funktionselemente einen geringen Grad an gegenseitiger freien Beweglichkeit. Dazu sind die in azimutaler Richtung angeordneten Seitenflächen der Funktionselemente vorzugsweise in radialer Richtung nach innen verjüngend oder erweiternd ausgebildet. Durch diese Ausgestaltung der Seitenflächen wird das Zusammendrücken der Funktionselemente vor dem und beim Einschieben des Klemmrings in das Fitting erleichtert, ohne dass die Funktionselemente gegeneinander verkanten.

Die zuvor beschriebenen Funktionselemente und der Montagering und somit der Klemmring als Ganzes bestehen bevorzugt aus einem der nachfolgenden Materialien: vernetztes Polyethylen (PE-X), Silan-vernetztes Polyethylen (PE-Xb) oder physikalisch vernetztes Polyethylen (PE-Xc), Polypropylen (PP), Polyphenylsulfon (PPSU), Polyetheretherketon (PEEK) oder Polyaryletherketon (PAEK), aliphatisches biobasiertes Polyamid (PA410, PA12, PA12-GF30) oder Polypropylen-Random-Copolymer mit modifizierter Kristallstruktur und erhöhter Temperaturbeständigkeit (PP-RCT).

Des Weiteren können die Funktionselemente an dem einer einzusetzenden Dichtung zugewandten Ende einen Dichtungssitz aufweisen. Der Dichtungssitz wird vorzugsweise durch ein axial vorstehendes Halteelement realisiert, das den vom Funktionselement aufgespannten Raum radial nach innen begrenzt und dadurch die Bewegungsfreiheit der Dichtung einschränkt. Das Funktionselement kann aber auch abschnittsweise rund ausgebildet ein und allein durch eine axiale Anlage an der Dichtung die Bewegungsfreiheit der Dichtung einschränken.

Der Dichtungssitz verbessert einerseits den Dichtungsschutz, indem beim Verpressen des Fittings ein Herausdrücken der Dichtung in axialer Richtung eingeschränkt oder verhindert wird. Andererseits verhindert der Dichtungssitz ein Herausdrücken durch axial auftretende Kräfte beim Rohreinschub. Zudem wird die Position der Dichtung auch im unverpressten Zustand bei auftretenden Druckunterschieden gegen ein Verschieben gesichert, wenn durch Druckunterschiede die Dichtung in axialer Richtung angesaugt wird.

Die Funktionselemente des Klemmrings können gleiche oder unterschiedliche Funktionen ausüben und daher unterschiedlich ausgestaltet sein. Die unterschiedlichen Funktionen können alternierend oder in anderer Weise abwechselnd durch die benachbart angeordneten Funktionselemente realisiert sein.

Bei einer ersten bevorzugten Ausgestaltung sind die Funktionselemente zumindest teilweise als Halteelemente ausgebildet und die Halteelemente weisen radial nach innen gerichtete, vorzugsweise elastisch ausgebildete, Führungselemente für ein Zentrieren und gegebenenfalls Halten eines einzuführenden Rohres auf. Somit dienen die Halteelemente zum einen beim Einführen des Rohres in ein Fitting und den darin angeordneten Klemmring für ein Zentrieren des Rohres und zum anderen nach dem Einführen und vor dem Verpressen des Fittings für ein Halten des Rohres mit definierten Montagekräften.

Das Zentrieren des Rohres beim Einführen in das Fitting wird zudem in bevorzugter Weise dadurch verbessert, dass in axialer Richtung hintereinander mindestens zwei radial verschieden weit nach innen vorstehende Führungselemente ausgebildet sind. Somit ergeben sich nacheinander während des Einschiebens des Rohres eine erste Zentrierung und eine zweite Zentrierung. Das erste vom Fitting aus betrachtet distale Führungselement kann weniger weit nach innen rein als das proximale Führungselement ragen, so dass insbesondere für schräg eingesetzte Rohre eine gute Führung hin zur richtigen Position für ein Verpressen erreicht wird. Darüber hinaus halten die verschiedenen Führungselemente das eingeschobene Rohr nach der Montage und vor dem Verpressen.

Die Ausbildung der Führungselemente führt zu definierten Montagekräften und daher auch zu einer verbesserten haptischen Kontrolle beim Einführen eines Rohres in das Fitting, insbesondere bei einer zweistufigen Ausbildung von zwei verschieden weit nach innen ragenden Führungselementen. Der Benutzer kann genauer haptisch kontrollieren, ob das Rohr richtig und weit genug eingeschoben worden ist.

Durch die Geometrie der Führungselemente mit definierter Materialstärke und Materialeigenschaften kann eine gleichbleibende Montage- und Rohrhaltekraft unabhängig der Toleranzen des Rohrs realisiert werden.

Die Führungselemente bewirken wegen der Zentrierungsfunktion, insbesondere zusammen mit dem oben beschriebenen Dichtungssitz zur genaueren Positionierung der Dichtung, dass während des Einschiebens des Rohres die äußere Oberfläche des Rohres mit der Innenseite der Dichtung nur in geringem Maße oder vorzugsweise gar nicht in Berührung kommt. Somit wird die Gefahr einer Beschädigung der Dichtung verringert und auch ohne Anwendung von gleitfördernden Mitteln wie Silikonöl können niedrige Einschubkräfte realisiert werden. Der Einsatz von Dichtungen ohne lackbenetzungsstörende Substanzen (LABS-frei) und ohne Silikon ist somit möglich.

Auch die Funktionalität einer im unverpressten Zustand gewollten undichten Anordnung aus Rohr und Dichtung wird durch die beschriebene Ausgestaltung verbessert, da das Positionieren und Halten des Rohrs relativ zur Dichtung verbessert wird. Weist beispielsweise die Dichtung einen ausreichend größeren Innendurchmesser als der Außendurchmesser des Rohres auf, dann kann eine gewollte Undichtigkeit im unverpressten Zustand erreicht und sichergestellt werden.

Alternativ zu den Halteelementen können die Funktionselemente zumindest teilweise als Fixierelemente ausgebildet sein und die Fixierelemente können jeweils mindestens ein Schneidelement zum Fixieren eines einzuschiebenden Rohres aufweisen. Nach dem Einschieben und nach dem Verpressen des Fittings wird das Rohr durch die Fixierelemente vor einem Herausziehen des Rohres aus dem Fitting gesichert.

In bevorzugter Weise liegen die Schneidelemente innen am Rohr entlang eines linienförmigen Bereichs, insbesondere einer Schneide, und außen an der Kammer der Presshülse entlang eines flächigen Bereichs an. Dadurch kann beim Verpressen des Fittings die radial nach innen gerichtete Kraft effektiv zum Einschneiden des Schneidelements in die Wandung des Rohrs umgesetzt werden.

Bei einer bevorzugten Ausgestaltung des Klemmrings weisen die Fixierelemente in Umfangsrichtung neben den Schneidelementen angeordnete Schutzelemente auf, wobei die Schutzelemente in radialer Richtung weiter als die Schneidelemente nach innen ragen. Dadurch wird das Rohr beim Einschieben und vor dem Verpressen vor einem Kontakt mit den Schneidelementen geschützt und eine Beschädigung der Oberfläche des Rohres an ungewollten Stellen wird dadurch weitgehend vermieden. Die Schutzelemente wirken also ähnlich wie die oben beschriebenen Führungselemente.

Bei einer weiteren bevorzugten Ausgestaltung des Klemmrings können die Funktionselemente zumindest teilweise als Hemmelemente mit einer radial nach innen gerichteten Nocke ausgebildet sein, wobei die Nocke in radialer Richtung elastisch nach außen verformbar ausgebildet ist und wobei die Nocke eine radial nach innen gerichtete gebogene Oberfläche aufweist.

Im Fitting ist die nach innen gerichtete gebogene Oberfläche der Nocke dem einzusteckenden Rohr zugewandt und liegt an der Außenseite des Rohres an. Durch die Bewegung des Rohres in das Fitting hinein wird die Nocke nach außen verformt und ggf. verschwenkt und bleibt beim Verschwenken aufgrund der gebogenen Oberfläche in Kontakt mit dem Rohr.

Die Nocke ist bevorzugt in Einschubrichtung des Rohrs unter einem Winkel kleiner 90° zur Achse des einzuschiebenden Rohres schräg ausgerichtet. Durch den Kontakt mit dem Rohr muss die Nocke bei Einschieben in Richtung ihrer schrägen Ausrichtung nach außen verformt werden und wird somit an das Rohr angedrückt. Dadurch erhöht sich der Anpressdruck an das Rohr und die Haftreibung erhöht sich.

Beim Herausziehen des Rohres aus dem Fitting wird die Nocke aufgrund der Haftreibung mitbewegt, wobei das Hemmelement als Ganzes nicht oder nur geringfügig bewegt wird. Durch die Mitbewegung der Nocke entgegen ihrer schrägen Ausrichtung kommt es zu einem weiteren Verformen, das eine Gegenkraft gegenüber dem Herausziehen hervorruft. Dadurch erhöht sich die Auszugskraft gegenüber der Einschubkraft und eine verbesserte Selbsthaltung wird dadurch erreicht. Eine geringere Einschubkraft erleichtert das Verbinden von Rohr und Fitting und eine größere Auszugskraft verbessert die Selbsthaltung.

Durch die Ausgestaltung des Hemmelementes als Teil des Klemmrings wird die Vormontage, insbesondere die Vormontage einer Installation an der Wand oder in einem Schacht erleichtert. Die unverpresste Verbindung zwischen Rohr und Fitting ist dann durch die höhere Auszugskraft besser vor einem Auseinandergleiten geschützt.

In bevorzugter Weise sind mindestens drei Hemmelemente mit Nocken vorgesehen und die Nocken bilden an der radial nach innen gelegenen Seite einen Durchmesser kleiner als der Außendurchmesser des einzuschiebenden Rohrs bilden. Da die Fittings und die darin zu verbauenden Klemmringe jeweils für bestimmte Nennweiten ausgebildet sind, können diese auch ohne ein vorhandenes Rohr definiert sein. Da der Innendurchmesser kleiner als der Außendurchmesser des Rohres ist, ist die Anlage der Nocken an der Außenseite des Rohres sichergestellt.

In besonders bevorzugter Weise sind ein Teil der Funktionselemente als Hemmelemente und/oder ein Teil der Funktionselemente als Halteelemente und/oder ein Teil der Funktionselemente als Fixierelemente ausgebildet. Der Aufbau des Klemmrings ist daher sehr flexibel gestaltbar. Die Funktionselemente können als Halteelemente und Fixierelemente ausgebildet sein. Ebenso können beispielsweise Hemmelemente und Fixierelemente miteinander kombiniert werden, da die Hemmelemente auch eine Haltefunktion übernehmen können. Ebenso können Hemmelemente und Halteelemente miteinander kombiniert werden, wenn im Fitting ein separates Fixierelement, beispielsweise ein Fixierring angeordnet ist. Des Weiteren ist es auch möglich, dass die Funktionselemente nur als Hemmelementen ausgebildet sind, wobei ein zusätzlicher Fixierring in der Presshülse angeordnet ist.

Die zuvor beschriebenen Führungselemente der Halteelemente und die Schutzelemente der Fixierelemente können zusätzlich zu den Schneidelementen zur Fixierung beitragen, indem diese beim Verpressen ebenfalls in die Rohrwandung eindringen. Somit kann die Anzahl der Fixierelemente gegenüber der Anzahl der Haltelemente geringer sein.

Des Weiteren ist es bevorzugt, wenn der Außendurchmesser des Montagerings im Wesentlichen an den Innendurchmesser des distalen Endes der Presshülse ausgebildet ist. Dadurch kommt es bei der Vormontage bereits zu einem festen Anliegen des Montagerings an der Innenseite der Presshülse.

Zudem kann der Innendurchmesser des Montagerings größer oder gleich groß wie der Außendurchmesser des zu verbindenden Rohres sein. Dadurch wird das Einschieben des Rohres in den Montagering nach dessen Vormontage erleichtert und der Montagering muss nicht verformt werden.

Des Weiteren ist es vorteilhaft, wenn der Außendurchmesser der Funktionselemente in der Ausgangsposition im Wesentlichen dem Innendurchmesser der Presshülse entspricht. Dann liegen die Funktionselemente nach der Vormontage des Klemmrings an der Innenseite der Presshülse an und sind somit in einer geeigneten Position, um das Rohr aufzunehmen und anschließend verpresst zu werden.

Außerdem ist es bevorzugt, dass ein in dem Grundkörper umfangseitig ausgebildetes und nach innen vorstehendes Anschlagelement vorgesehen ist und dass das Dichtelement angrenzend an das Anschlagelement angeordnet ist. Somit kann das Rohr bis zu einer durch das Anschlagelement vorgegebenen Position eingeführt werden und der Anwender des Fittings erhält eine haptische Kontrollmöglichkeit zu überprüfen, ob der Rohr genügend weit eingeschoben worden ist.

Im Folgenden wird die Erfindung anhand von Ausführungsbeispielen mit Bezug auf die Zeichnung erläutert. In der Zeichnung zeigen
- Fig. 1 bis 4: ein Ausführungsbeispiel eines Klemmrings in verschiedenen Ansichten,
- Fig. 5 und 6: ein Fitting mit eingesetzten Klemmringen nach den Fig. 1 bis 4,
- Fig. 7 bis 10: ein weiteres Ausführungsbeispiel eines Klemmrings in verschiedenen Ansichten,
- Fig. 11: ein weiteres Ausführungsbeispiel eines Fittings mit einem Klemmring und
- Fig. 12a bis c: eine Abfolge zur Verdeutlichung des Einsetzens eines Klemmrings in ein Fitting.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

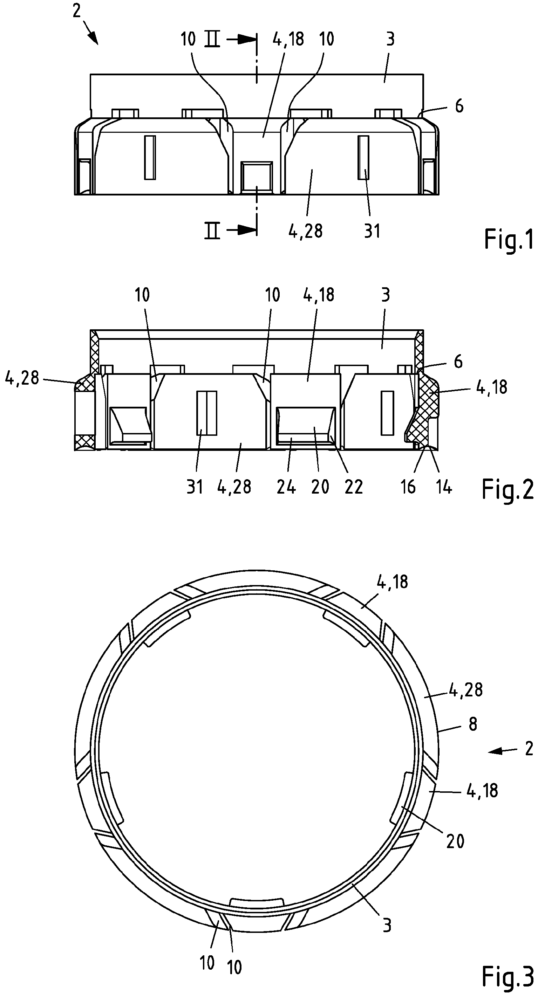

In den Fig. 1 bis 4 wird ein erstes Ausführungsbeispiel eines Klemmrings 2 für ein Fitting für ein von außen abzudichtendes Rohr gezeigt. Der Klemmring 2 weist einen umfangseitig geschlossenen Montagering 3 und eine Mehrzahl von Funktionselementen 4 auf, die zum Halten und/oder Fixieren eines einzusteckenden Rohrs ausgebildet sind.

Die Funktionselemente 4 sind umfangseitig mit dem Montagering 3 verschwenkbar verbunden sind und können aus einer Ausgangsposition radial nach innen elastisch bewegt werden. Dazu sind Scharnierelemente 6 vorgesehen, die das gegenseitige Verschwenken ermöglichen. Weiterhin definieren die Funktionselemente 4 in der Ausgangsposition einen äußeren Durchmesser, der größer als der Außendurchmesser des Montagerings 3 ist. Des Weiteren sind die Funktionselemente 4 in der Ausgangsposition in azimutaler Richtung beabstandet voneinander angeordnet.

Wie sich aus den Fig. 1 bis 4 weiter ergibt, weisen die Funktionselemente 4 eine teilzylindrische Außenfläche 8 auf, die an die zylindrische Formen des Fittings bzw. der Kammer der zugeordneten Presshülse angepasst ist. Dadurch kann der Klemmring 2 zumindest abschnittsweise flächig am Fitting anliegen.

Weiterhin weisen die Funktionselemente 4 in azimutaler Richtung Seitenflächen 10 auf, die in radialer Richtung nach innen verjüngend oder erweiternd ausgebildet sind. Dadurch sind die Funktionselemente 4 in der Ausgangsposition voneinander beabstandet und können ohne gegenseitige Anlage aneinander nach innen elastisch verbogen werden.

Die Funktionselemente 4 weisen weiterhin an dem einer einzusetzenden Dichtung zugewandten Ende einen Dichtungssitz 14 auf, der durch ein axial vorstehendes Halteelement 16 ausgebildet ist. Der Dichtungssitz 14 sichert die Position der Dichtung innerhalb eines Fittings sowohl vor als auch nach dem Verpressen des Fittings.

Wie sich bereits unmittelbar aus den Fig. 1 bis 4 ergibt, sind die Funktionselemente 4 unterschiedlich ausgebildet.

Zum einen sind die Funktionselemente 4 teilweise als Halteelemente 18 ausgebildet und weisen radial nach innen gerichtete elastische Führungselemente 20 für ein Zentrieren und gegebenenfalls Halten eines einzuführenden Rohres auf. Die Federelemente 20 sind so ausgebildet, dass definierte Montagekräfte und eine verbesserte Rohrhaltefunktion erreicht werden.

Die Führungselemente 20 sind gemäß Fig. 1 und 2 durch eine an drei Seiten verlaufende Freistellung 22 aus dem Material des Halteelementes 18 herausgearbeitet und sind somit elastisch federnd ausgestaltet. Radial nach innen gerichtet weisen die Führungselemente 20 vorstehende Keile 24 auf, die an dem einzuführenden Rohr anliegen und dieses führen.

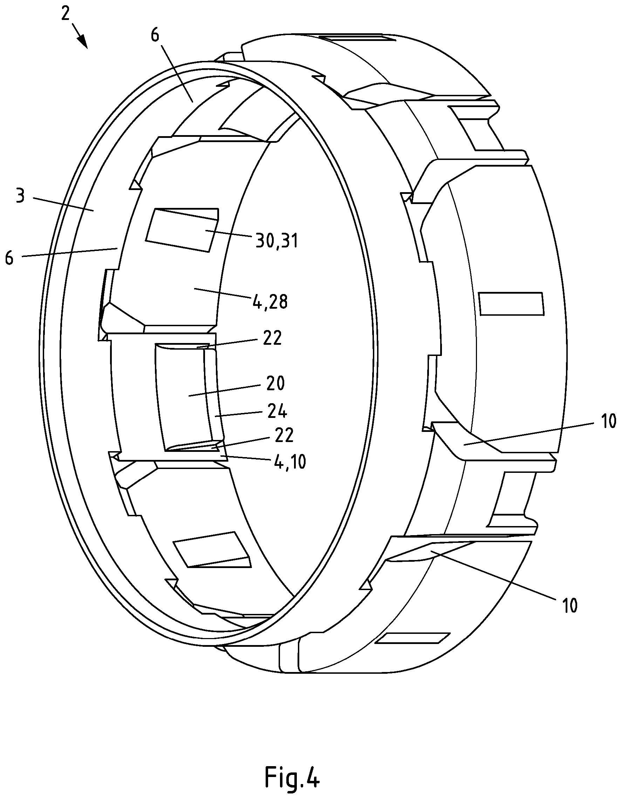

Zum anderen und alternativ zu den Halteelementen 18 ist ein weiterer Teil der Funktionselemente 4 als Fixierelemente 28 ausgebildet und weisen jeweils mindestens ein Schneidelement 30 zum Fixieren eines einzuschiebenden Rohres auf. Dazu weist das Fixierelement 28 eine in den Fig. 1 und 2 gezeigte Ausnehmung 31 auf, in die das Schneidelement 30 eingesetzt wird, was wiederum in Fig. 4 perspektivisch dargestellt ist. Das Schneidelement 30 besteht dabei bevorzugt aus einem Metall und fixiert ein eingeschobenes Rohr nach dem Verpressen vor einem Herausziehen des Rohres aus dem Fitting.

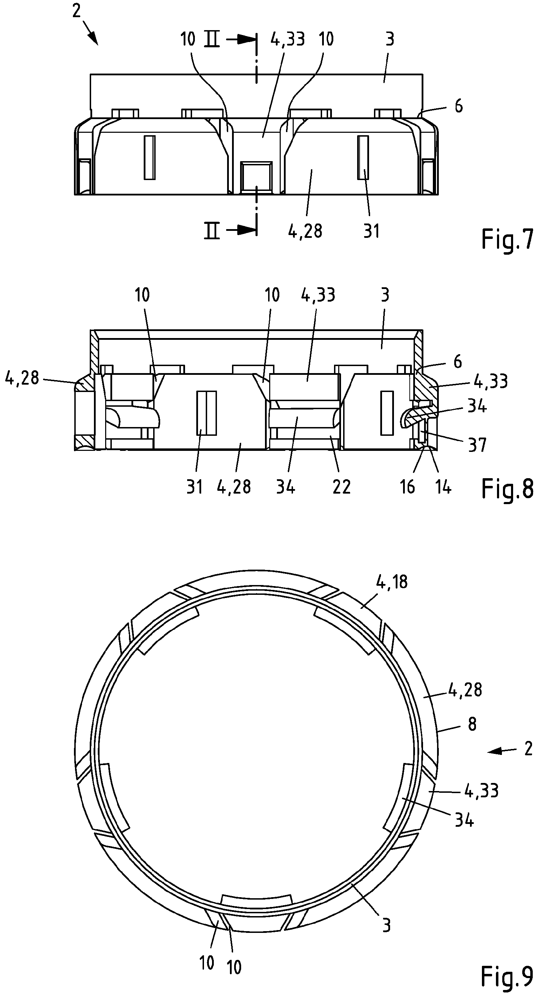

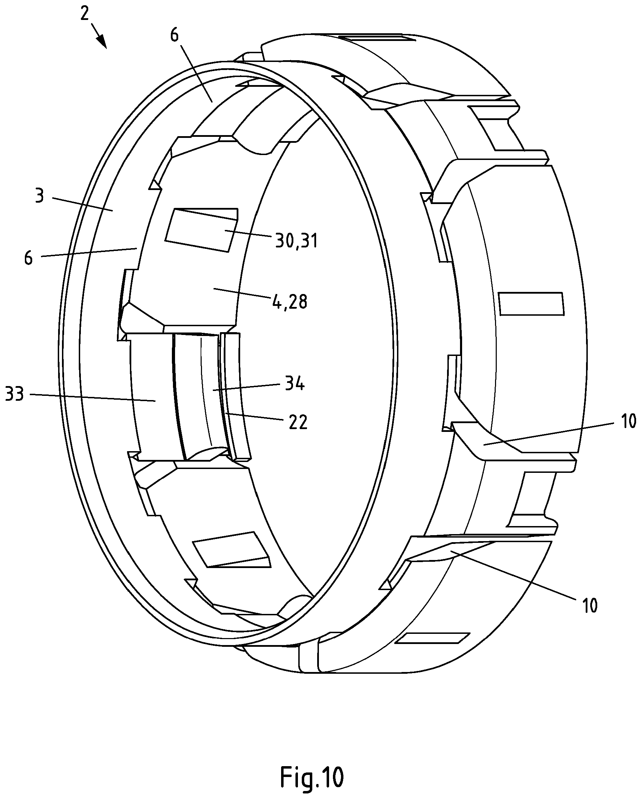

Das Ausführungsbeispiel der Fig. 7 bis 10 zeigt eine weitere mögliche Ausgestaltung der Funktionselemente 4 in Form von erfindungsgemäßen Hemmelementen 33, die anstelle der Halteelemente 18 nach Fig. 1 bis 4 vorgesehen sind. Die Hemmelemente 33 weisen jeweils eine radial nach innen gerichtete Nocke 34 auf, die in radialer Richtung elastisch nach außen verformbar ausgebildet ist. Im eingebauten Zustand, der weiter unten erläutert wird, befindet sich das Hemmelement 33 in Anlage an der Innenwand der Presshülse, so dass das Verformen der Nocke 34 weniger ein Durchbiegen und mehr eine Formänderung bedeutet.

Die Nocke 34 weist eine radial nach innen gerichtete gebogene Oberfläche 35 auf. Somit ist die Oberfläche 35 dem einzusteckenden Rohr zugewandt, wie sich weiter unten noch im Detail ergibt.

Des Weiteren ist die Nocke 34 in Einschubrichtung des Rohrs (in Fig. 7 und 8 von unten) unter einem Winkel kleiner 90° zur Achse des einzuschiebenden Rohres schräg ausgerichtet. Diese schräge Ausrichtung ergibt sich durch geneigte Oberflächen 36a und 36b der Nocke 34.

Für die beschriebene Verformbarkeit der Nocke 34 und die damit notwendige Bewegungsfreiheit weist das Hemmelement 33 eine Freistellung 37 auf.

Wie sich aus Fig. 1 bis 4 sowie 7 bis 10 ergibt, sind ein Teil der Funktionselemente 4 als Fixierelemente 28 und ein Teil der Funktionselemente 4 als Halteelemente 18 oder als Hemmelemente 33 ausgebildet. Dabei wechseln sich Fixierelemente 28 und die Halteelemente 18 bzw. die Hemmelemente 33 einander ab, so dass diese umfangseitig gleich verteilt angeordnet sind. Bei diesen Ausführungsbeispielen ist daher die Anzahl der Fixierelemente 28 gleich der Anzahl der Halteelemente 18 bzw. gleich der Anzahl der Hemmelemente 33.

Grundsätzlich kann der Klemmring 2 beliebig ausgestaltet sein. Zum einen kann der Klemmring 2 nur Hemmelemente 33 aufweisen. Zum anderen kann der Klemmring 33 zusätzlich zu Hemmelementen 33 auch mindestens ein Halteelement und/oder mindestens ein Fixierelement 28 aufweisen.

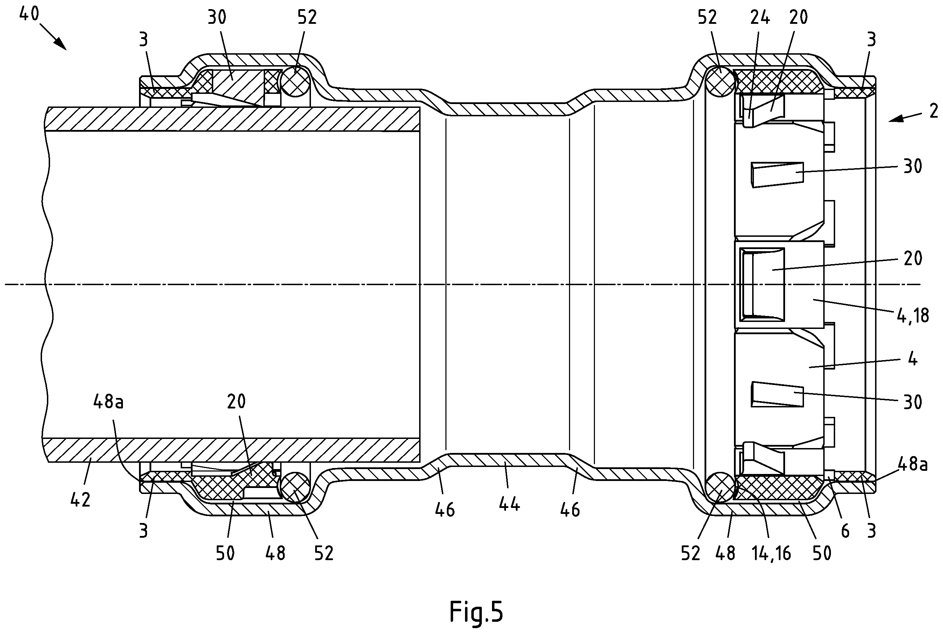

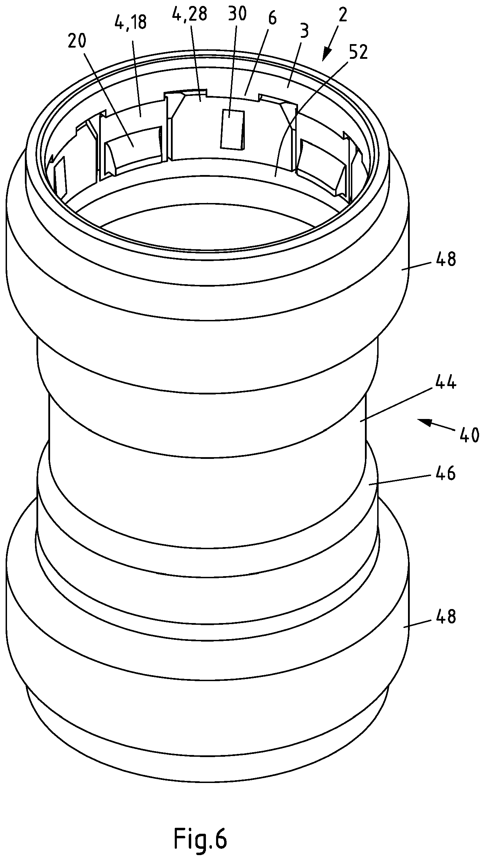

Die Fig. 5 und 6 zeigen ein Ausführungsbeispiel eines Fittings 40 zum Verbinden mit einem von außen abzudichtenden Rohr 42, wobei das Rohr 42 nur an einer Seite des Fittings 40 eingeführt worden ist. Das Fitting 40 weist einen Grundkörper 44 und ein in dem Grundkörper 44 umfangseitig ausgebildeten und nach innen vorstehenden Anschlagelement 46 in Form einer Durchmesserverjüngung. Des Weiteren ist eine mit dem Grundkörper 44 verbundenen bildenden Presshülse 48 vorgesehen, wobei die Presshülse 48 eine nach innen zum aufzunehmenden Rohr 42 hin gerichtete Kammer 50 aufweist.

In der Kammer 50 ist der in den Fig. 1 bis 4 dargestellte Klemmring 2 angeordnet. Wie beschrieben besteht der Klemmring 2 aus einem Kunststoff und weist eine Mehrzahl von Funktionselementen 4 auf. In der Kammer 50 ist angrenzend an das Anschlagelement 46 ein Dichtelement 52 angeordnet, das vorliegend als O-Ring ausgebildet ist.

Die Presshülse 48 ist geeignet, zusammen mit dem Klemmring 2, den Funktionselementen 4 und dem Dichtelement 52 das zu verbindende Rohr 42 von außen abzudichten und zu fixieren.

In den Fig. 5 und 6 ist gezeigt, dass die Funktionselemente 4 in der Kammer 50 an der Wandung der Presshülse 48 anliegen bzw. im Wesentlichen parallel dazu angeordnet. Beim Einschieben des Rohres 42 werden die Funktionselemente 4 nicht wesentlich verformt, außer den zuvor beschriebenen Verformungen von Haltelementen 18 oder Hemmelementen 33. Der Grund liegt darin, dass der Außendurchmesser der Funktionselemente 4 in der Ausgangsposition im Wesentlichen dem Innendurchmesser der Presshülse 48 entspricht.

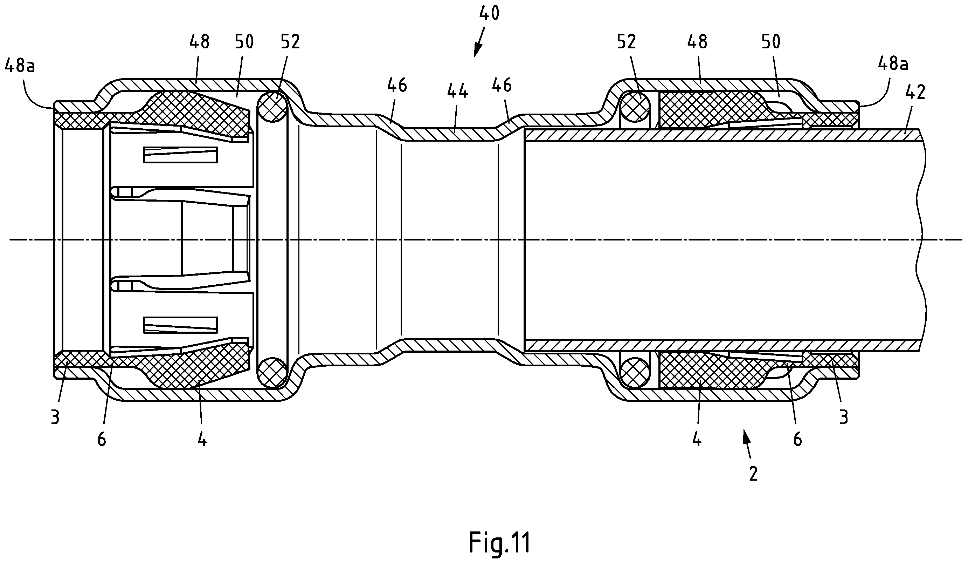

Fig. 11 zeigt ein weiteres Ausführungsbeispiel, bei dem die Funktionselemente 4 im eingesetzten Zustand teilweise radial nach innen ragen und den Querschnitt innerhalb der Kammer 50 so weit verringern, dass beim Einschieben des Rohres 42 die Funktionselemente 4 erst in ihre endgültige Position gebracht werden. Dieses hat den Vorteil einer zusätzlichen haptischen Kontrolle beim Einschieben des Rohres 42.

Wie sich au den Fig. 5 und 6 bzw. 11 ergibt, ist der Außendurchmesser des Montagerings 3 im Wesentlichen an den Innendurchmesser des distalen Endes 48a der Presshülse 48 ausgebildet. Somit ist der Montagering 3 sicher im Ausgangsbereich des Fittings 40 umfangseitig gehalten.

Weiterhin ist der Innendurchmesser des Montagerings 3 größer oder gleich groß wie der Außendurchmesser des zu verbindenden Rohres 42. Dadurch kommt es zu keiner wesentlichen Beeinträchtigung beim Einschieben des Rohres 42 und ein Verkanten des Rohres kann vermieden werden.

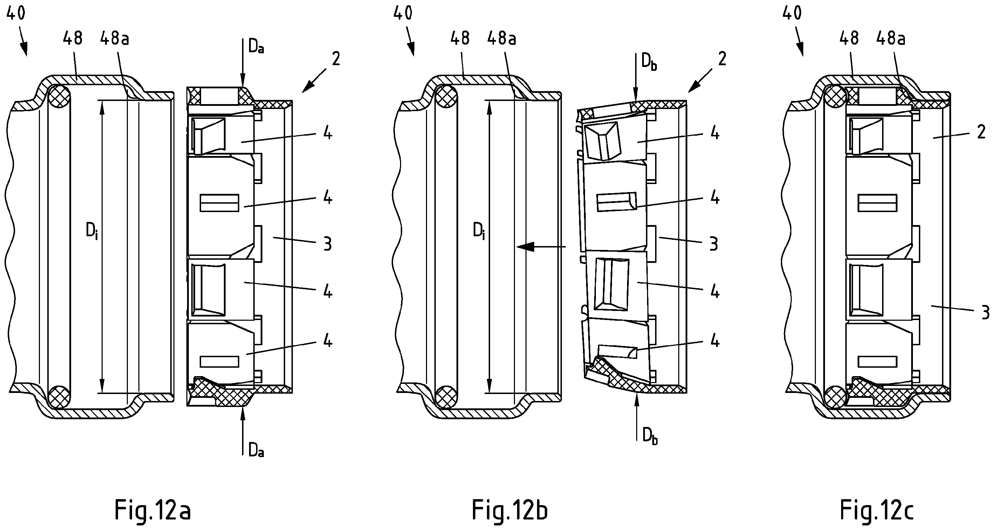

In Fig. 12a bis 12c wird das Einsetzen des Klemmrings 2 in den Fitting 40 gezeigt.

Fig. 12 a zeigt die Ausgangsposition, in der die Funktionselemente 4 ein Außendurchmesser Dₐ definieren, der größer als der Innendurchmesser Dᵢ des distalen Endes 48a der Presshülse 48 ist. In dieser Form kann der Klemmring 4 nicht in die Presshülse 48 eingeführt werden.

Da die Funktionselemente 4 auf einen Außendurchmesser D_{b} kleiner als der Innendurchmesser Dᵢ des distalen Endes der Presshülse 48 zusammendrückbar sind, kann der Klemmring 2 die in Fig. 12b gezeigte Form annehmen und in die Presshülse 48 eingeführt werden.

Nach dem Einführen ist der Klemmring 2, wie Fig. 12c zeigt, in der Presshülse 48 in der für ein Einführen und Verpressen des Rohres 42 geeigneten Position.

## Patentansprüche

1. Klemmring für ein Fitting für ein von außen abzudichtendes Rohr,
- mit einem umfangseitig geschlossenen Montagering (3) und
- mit einer Mehrzahl von Funktionselementen (4),
- wobei die Funktionselemente (4) zum Halten und/oder Fixieren eines einzusteckenden Rohrs ausgebildet sind,
- wobei die Funktionselemente (4) umfangseitig mit dem Montagering (3) verschwenkbar verbunden sind und aus einer Ausgangsposition radial nach innen elastisch bewegbar sind,
- wobei die Funktionselemente (4) in der Ausgangsposition einen äußeren Durchmesser definieren, der größer als der Außendurchmesser des Montagerings (3) ist.

2. Klemmring nach Anspruch 1,
**dadurch gekennzeichnet**,
- wobei die Funktionselemente (4) in der Ausgangsposition in azimutaler Richtung beabstandet voneinander angeordnet sind.

3. Klemmring nach Anspruch 1 oder 2,
**dadurch gekennzeichnet,**
- **dass** die in azimutaler Richtung angeordneten Seitenflächen (10) der Funktionselemente (4) in radialer Richtung nach innen verjüngend oder erweiternd ausgebildet sind.

4. Klemmring nach einem der Ansprüche 1 bis 3,
**dadurch gekennzeichnet,**
- **dass** die Funktionselemente (4) zumindest teilweise als Halteelemente (18) ausgebildet sind und
- **dass** die Halteelemente (18) radial nach innen gerichtete, vorzugsweise elastisch ausgebildete, Führungselemente (20, 24) für ein Zentrieren und gegebenenfalls Halten eines einzuführenden Rohres aufweisen.

5. Klemmring nach einem der Ansprüche 1 bis 4,
**dadurch gekennzeichnet,**
- **dass** die Funktionselemente (4) zumindest teilweise als Fixierelemente (28) ausgebildet sind und
- **dass** die Fixierelemente (28) jeweils mindestens ein Schneidelement (30) zum Fixieren eines einzuschiebenden Rohres aufweisen.

6. Klemmring nach einem der Ansprüche 1 bis 5,
**dadurch gekennzeichnet,**
- **dass** die Funktionselemente (4) zumindest teilweise als Hemmelemente (33) mit einer radial nach innen gerichteten Nocke (34) ausgebildet sind,
- **dass** die Nocke (34) in radialer Richtung elastisch nach außen verformbar ausgebildet ist und
- **dass** die Nocke (34) eine radial nach innen gerichtete gebogene Oberfläche (35) aufweist.

7. Fitting zum Verbinden mit einem von außen abzudichtenden Rohr (42),
- mit einem Grundkörper (44),
- mit einer mit dem Grundkörper (44) verbundenen Presshülse (48), wobei die Presshülse (48) eine nach innen zum aufzunehmenden Rohr (42) hin gerichtete Kammer (50) aufweist,
- mit einem in der Kammer (50) angeordneten Klemmring (2), wobei der Klemmring (2) aus einem Kunststoff besteht und eine Mehrzahl von Funktionselementen (4) aufweist, und
- mit einem in der Kammer (50) angeordneten Dichtelement (52),
- wobei die Presshülse (48) geeignet ist, zusammen mit dem Klemmring (2) und dem Dichtelement (52) das zu verbindende Rohr (42) von außen abzudichten,
**dadurch gekennzeichnet,**
- **dass** der Klemmring (2) nach einem der Ansprüche 1 bis 5 ausgebildet ist.

8. Fitting nach Anspruch 7,
**dadurch gekennzeichnet,**
- **dass** der Außendurchmesser des Montagerings (3) im Wesentlichen an den Innendurchmesser des distalen Endes der Presshülse (48) ausgebildet ist.

9. Fitting nach Anspruch 7 oder 8,
**dadurch gekennzeichnet,**
- **dass** der Innendurchmesser des Montagerings (3) größer oder gleich groß wie der Außendurchmesser des zu verbindenden Rohres (42) ist.

10. Fitting nach einem der Ansprüche 7 bis 9,
**dadurch gekennzeichnet,**
- **dass** der Außendurchmesser der Funktionselemente (4) in der Ausgangsposition im Wesentlichen dem Innendurchmesser der Presshülse (48) entspricht.

11. Fitting nach einem der Ansprüche 7 bis 10,
**dadurch gekennzeichnet,**
- **dass** die Funktionselemente (4) auf einen Außendurchmesser kleiner als der Innendurchmesser des distalen Endes der Presshülse (48) zusammendrückbar sind.

12. Fitting nach einem der Ansprüche 7 bis 11,
**dadurch gekennzeichnet,**
- **dass** ein in dem Grundkörper (44) umfangseitig ausgebildetes und nach innen vorstehendes Anschlagelement (46) vorgesehen ist und
- **dass** das Dichtelement (52) angrenzend an das Anschlagelement (46) angeordnet ist.
